# EUROPÄISCHE PATENTSCHRIFT

(11) **EP 2 727 277 B1**
(45) Veröffentlichungstag und Bekanntmachung des Hinweises auf die Patenterteilung: **17.05.2017**
(21) Anmeldenummer: 12745815.6
(22) Anmeldetag: 01.08.2012
(51) Int. Cl.: H04L 9/08, H04L 9/32

(54) **SYSTEM ZUR SICHEREN ÜBERTRAGUNG VON DATEN UND VERFAHREN**
SYSTEM AND METHOD FOR THE SECURE TRANSMISSION OF DATA
SYSTÈME DE TRANSMISSION SÉCURISÉE DE DONNÉES ET PROCÉDÉ

(30) Priorität: 23.08.2011 DE 102011081421
(43) Veröffentlichungstag der Anmeldung: 07.05.2014
(73) Patentinhaber: Siemens Aktiengesellschaft, 80333 München (DE)
(72) Erfinder: MEYER, Bernd, 81739 München (DE)
(86) Internationale Anmeldenummer: PCT/EP2012/065010
(87) Internationale Veröffentlichungsnummer: WO 2013/026663

(56) Entgegenhaltungen:
- WO-A2-2006/067739
- US-A1- 2010 322 418
- EDWARD SUH G ET AL: "Physical Unclonable Functions for Device Authentication and Secret Key Generation", 2007 44TH ACM/IEEE DESIGN AUTOMATION CONFERENCE : SAN DIEGO, CA, 4 - 8 JUNE 2007, IEEE, PISCATAWAY, NJ, 1. Juni 2007 (2007-06-01), Seiten 9-14, XP031183294, ISBN: 978-1-59593-627-1

## Beschreibung

Die vorliegende Erfindung betrifft ein System zur sicheren Übertragung von Daten und ein Verfahren zum sicheren Übertragen von Daten.

### Stand der Technik

In elektronischen Systemen, welche eine gesicherte Übertragung von Daten aufweisen, werden heute Sicherheitsmodule eingesetzt, welche die Verschlüsselung und/oder Authentisierung von Daten vornehmen. Dazu werden diese Sicherheitsmodule mit einer Steuereinrichtung des elektronischen Systems über eine gesicherte Datenverbindung gekoppelt und tauschen mit der Steuereinrichtung Daten beispielsweise verschlüsselt aus, so dass ein potentieller Angreifer die Daten nicht im Klartext innerhalb des elektronischen Systems abgreifen kann, bevor diese durch das Sicherheitsmodul kryptographisch bearbeitet werden. Falls die Datenkommunikation zwischen der Steuereinrichtung und dem Sicherheitsmodul nicht verschlüsselt ist, könnte ein Angreifer die Daten durch ein einfaches Abhören der Datenkommunikation zwischen der Steuereinrichtung und dem Sicherheitsmodul mitlesen. Analoge Schlussfolgerungen gelten bezüglich der Integrität der Datenkommunikation zwischen der Steuereinrichtung und dem Sicherheitsmodul.

Soll ein bestehendes elektronisches System, zum Beispiel ein Steuersystem für eine Automatisierungsanlage, welches kein Sicherheitsmodul aufweist, z.B. bei einer Revision der Hardware um ein solches Sicherheitsmodul erweitert werden, besteht häufig das Problem, dass die Steuereinrichtungen, welche in den elektronischen System vor der Revision der Hardware verwendet wurden, keinen sicheren nicht-flüchtigen Speicher aufweisen, in dem ein geheimer Schlüssel abgelegt werden kann. Wird nun bei einer Revision der Hardware ein Sicherheitsmodul in einem solchen elektronischen System vorgesehen, entsteht eine neue Kommunikationsschnittstelle zwischen der Steuereinrichtung des elektronischen Systems und dem Sicherheitsmodul. Da ein kryptographischer Schlüssel in der Steuereinrichtung nicht sicher gespeichert werden kann, ist eine verschlüsselte Kommunikation zwischen der Steuereinrichtung und dem Sicherheitsmodul nur schwer durchführbar. Die Steuereinrichtung kann lediglich unverschlüsselt mit dem Sicherheitsmodul kommunizieren. Dadurch wird aber das Abhören dieser Kommunikation für einen Angreifer erleichtert.

Ein Flash-Speicher, welcher einen kryptographischen Schlüssel dauerhaft speichern könnte, ist in der Herstellung aufwändig und kann nicht in gleichem Maße miniaturisiert werden, wie andere Halbleiterstrukturen, wie z.B. Transistoren. Daher ist es für derartige elektronische Systeme aus Kostengründen üblicherweise ausgeschlossen, dass die vorhandene Steuereinrichtung durch eine Steuereinrichtung mit einem sicheren nicht-flüchtigem internen Speicher ausgetauscht wird, in welchem ein kryptographischer Schlüssel sicher gespeichert werden könnte. Dies würde ferner eine vollständige Revision der Hardware und der Software des elektronischen Systems zur Folge haben und wäre daher sehr zeitaufwändig und kostenintensiv. Ferner ist die Datensicherheit von Flash-Speichern zeitlich begrenzt, z.B. 15 Jahre, und Flash-Speicher weisen nur eine begrenzte Anzahl von Schreibzyklen, von beispielsweise bis zu 1 Mio. Schreibzyklen, auf.

Anstatt eine vollständige Revision der Hardware und Software für ein elektronisches System zu entwickeln, kann die Kommunikation zwischen der Steuereinrichtung und dem Sicherheitsmodul auch anderweitig geschützt werden. Dazu kann z.B. der Schlüssel für eine verschlüsselte Kommunikation zwischen der Steuereinrichtung und dem Sicherheitsmodul in dem Computerprogrammprodukt, z.B. der Firmware, gespeichert werden, welches auf der Steuereinrichtung die Kommunikation mit dem Sicherheitsmodul steuert. Allerdings ist es mit geeigneten Analyse-Werkzeugen möglich, einen kryptographischen Schlüssel aus einer Firmware auszulesen.

Um ein solches Auslesen des kryptographischen Schlüssels zu verhindern, kann die Firmware gegen ein sog. Reverse-Engineering geschützt werden. Dem Fachmann sind dazu sogenannte Obfuskationstechniken bekannt. Solche Obfuskationstechniken sind allerdings bzgl. des damit erreichbaren Sicherheitsniveaus und hinsichtlich der Ausführungsgeschwindigkeit begrenzt. Ferner steigt durch den Einsatz von Obfuskationstechniken die Größe der Firmware und damit der Speicherbedarf zum Speichern und Ausführen der Firmware um ein Vielfaches (Faktoren von 30 und mehr) an.

### Zusammenfassung der Erfindung

Es ist daher eine Aufgabe der vorliegenden Erfindung, eine einfache Möglichkeit zur Absicherung der Kommunikation zwischen einer Steuereinrichtung und einem Sicherheitsmodul bereitzustellen.

Diese Aufgabe wird erfindungsgemäß durch ein System zur sicheren Übertragung von Daten mit den Merkmalen des Patentanspruchs 1 und durch ein Verfahren mit den Merkmalen des Patentanspruchs 11 gelöst.

Demnach ist vorgesehen:
Ein System zur sicheren Übertragung von Daten mit einer Steuereinrichtung, welche dazu ausgebildet ist, mittels einer physikalisch nicht nachahmbaren Funktion, PUF, einen kryptographischen Schlüssel zu erzeugen, und mit mindestens einem Sicherheitsmodul, welches dazu ausgebildet ist, mit der Steuereinrichtung, basierend auf dem erzeugten kryptographischen Schlüssel, vertraulich und/oder authentisch zu kommunizieren; wobei die Steuereinrichtung keinen zugriffsgeschützten nicht-flüchtigen Speicher zum Speichern des kryptographischen Schlüssels aufweist.

Ferner wird erfindungsgemäß bereitgestellt:
Ein Verfahren zum sicheren Übertragen von Daten mit den Schritten Bereistellen eines erfindungsgemäßen Systems, Erzeugen eines kryptographischen Schlüssels mittels einer physikalisch nicht nachahmbaren Funktion, PUF, in einer Steuereinrichtung und Kommunizieren zwischen der Steuereinrichtung und einem Sicherheitsmodul, basierend auf dem erzeugten kryptographischen Schlüssel.

Eine der vorliegenden Erfindung zu Grunde liegende Erkenntnis besteht darin, dass eine Steuereinrichtung üblicherweise Hardwaremerkmale aufweist, welche es erlauben, einen kryptographischen Schlüssel aus diesen Hardwaremerkmalen während dem laufenden Betrieb einer solchen Steuereinrichtung abzuleiten.

Die der vorliegenden Erfindung zu Grunde liegende Idee besteht nun darin, dieser Erkenntnis Rechnung zu tragen und eine Steuereinrichtung vorzusehen, welche mit Hilfe einer physikalisch nicht nachahmbaren Funktion, auch PUF genannt, einen kryptographischen Schlüssel aus Hardwaremerkmalen der Steuereinrichtung selbst ableiten kann. Daraufhin kann dieser abgeleitete kryptographische Schlüssel dazu genutzt werden, die Kommunikation zwischen der Steuereinrichtung und einem Sicherheitsmodul zu verschlüsseln und/oder zu authentisieren. Die Steuereinrichtung muss dabei den einmal erzeugten kryptographischen Schlüssel nicht dauerhaft speichern, da die Steuereinrichtung den kryptographischen Schlüssel z.B. bei jedem Systemstart erneut ableiten kann.

Mittels physikalisch nicht nachahmbarer Funktionen (PUFs) kann man aus geringfügigen Unterschieden in der technischen Ausprägung der Hardware, insbesondere individueller integrierter Schaltungen, einen robusten und eindeutigen Fingerabdruck einer gegebenen Hardware ableiten. Diese kleinen Unterschiede entstehen normalerweise durch nicht zu verhindernde Fertigungstoleranzen automatisch bei der Herstellung von Halbleitern. Falls gewünscht, können solche kleinen Hardwareunterschiede aber auch bewusst während der Produktion eines Halbleiters erzeugt werden. In einer erfindungsgemäßen Steuereinrichtung werden diese geringfügigen Hardwareunterschiede gemessen und in digitale Daten überführt, aus welchen die Steuereinrichtung dann einen kryptographischen Schlüssel ableitet.

Die vorliegende Erfindung ermöglicht es also, einen kryptographischen Schlüssel in einer Steuereinrichtung bereitzustellen, welcher nicht in einem nicht-flüchtigen Speicher gespeichert werden muss und basierend auf diesem kryptographischen Schlüssel dann eine verschlüsselte und/oder authentische Kommunikation durchzuführen. Dadurch wird nicht nur der Bedarf an Flash-Speicher reduziert bzw. vermieden, sondern es wird ferner verhindert, dass ein in einem Flash-Speicher gespeicherter kryptographischer Schlüssel von einem Angreifer durch Hardwaremanipulationen ausgelesen werden kann.

Die Verwendung einer physikalisch nicht nachahmbaren Funktion PUF hat ferner den Vorteil, dass bei einem Versuch der Manipulation der Hardware durch einen Angreifer die Hardwareeigenschaften derart geändert werden, dass eine Rekonstruktion des kryptographischen Schlüssels nicht mehr möglich ist.

In der vorliegenden Erfindung werden unter Kommunikation zwei Aspekte der Kryptographie verstanden. Zum einen kann eine kryptographisch geschützte Kommunikation das Sichern der Vertraulichkeit von Daten, also ein klassisches Verschlüsseln, aber auch das Sichern der Integrität von Daten, z.B. durch eine elektronische Signatur oder einen sog. "Message Authentication Code" bedeuten.

Insbesondere kann die vorliegende Erfindung in eingebetteten Systemen, z.B. Steuerungen für Industrieanlagen, vorteilhaft eingesetzt werden, da in diesen auf Grund von immer stärker zunehmenden Bedrohungen durch Angreifer ein erhöhtes Sicherheitsbedürfnis besteht.

Vorteilhafte Ausführungsformen und Weiterbildungen des erfindungsgemäßen Verfahrens und Systems ergeben sich aus den Unteransprüchen sowie aus der Beschreibung unter Bezugnahme auf die Figuren.

In einer Ausführungsform weist die Steuereinrichtung mindestens eine Hardwareeinrichtung, welche dazu ausgebildet ist, eine spezifische Merkmalskombination bereitzustellen, und eine Berechnungseinheit auf, welche dazu ausgebildet ist, basierend auf der bereitgestellten spezifischen Merkmalskombination den kryptographischen Schlüssel mittels der physikalisch nicht nachahmbaren Funktion, PUF, zu erzeugen. Wird eine Hardwareeinrichtung vorgesehen, welche eine spezifische Merkmalskombination bereitstellt, wird ein sicheres und wiederholbares Erzeugen des kryptographischen Schlüssels möglich.

In einer Ausführungsform weist das Sicherheitsmodul einen zugriffsgeschützten nichtflüchtigen Speicher und eine Recheneinrichtung auf, welche dazu ausgebildet ist, den erzeugten kryptographischen Schlüssel von der Steuereinrichtung zu erhalten und in dem nichtflüchtigen Speicher zu speichern. Dadurch wird ein effektives Verschlüsseln und/oder Authentisieren der Kommunikation zwischen der Steuereinrichtung und dem Sicherheitsmodul möglich, ohne dass die Steuereinrichtung dem Sicherheitsmodul den kryptographischen Schlüssel nach jedem Systemstart erneut übermitteln muss.

In einer Ausführungsform weisen die Steuereinrichtung und das Sicherheitsmodul jeweils eine Kommunikationsschnittstelle auf und sind dazu ausgebildet, über die Kommunikationsschnittstellen Daten auszutauschen, wobei die Steuereinrichtung dazu ausgebildet ist, dem Sicherheitsmodul über die Kommunikationsschnittstellen in einer unverschlüsselten Datenübertragung zunächst den kryptographischen Schlüssel bereitzustellen und nach der Datenübertragung des kryptographischen Schlüssels mit dem Sicherheitsmodul basierend auf dem übertragenen kryptographischen Schlüssel verschlüsselt und/oder authentisch zu kommunizieren. Das Sicherheitsmodul ist dazu ausgebildet, über die Kommunikationsschnittstellen mit der Steuereinrichtung zunächst unverschlüsselt zu kommunizieren und nach dem Erhalten des kryptographischen Schlüssels mit der Steuereinrichtung basierend auf dem erhaltenen kryptographischen Schlüssel verschlüsselt und/oder authentisch zu kommunizieren. Dadurch wird sichergestellt, dass die Steuereinrichtung mit dem Sicherheitsmodul lediglich so viele Daten wie notwendig über eine ungesicherte Kommunikation austauscht. Hat das Sicherheitsmodul den kryptographischen Schlüssel von der Steuereinrichtung erhalten, findet die Kommunikation somit nur verschlüsselt und/oder authentisch statt.

In einer Ausführungsform ist das Sicherheitsmodul dazu ausgebildet, den kryptographischen Schlüssel von der Steuereinrichtung lediglich ein einziges Mal zu erhalten und den erhaltenen kryptographischen Schlüssel in dem zugriffsgeschützten nichtflüchtigen Speicher abzuspeichern, wobei der zugriffsgeschützte nichtflüchtige Speicher als nur einmal beschreibbar ausgebildet ist und wobei die Steuereinrichtung dazu ausgebildet ist, den kryptographischen Schlüssel dem Sicherheitsmodul lediglich ein einziges Mal bereitzustellen.

Die Übertragung des kryptographischen Schlüssels von der Steuereinrichtung an das Sicherheitsmodul kann z.B. während der Herstellung des Systems in einem bestimmten Produktionsschritt in einer geeigneten geschützten Umgebung erfolgen. Dabei übermittelt die Steuereinrichtung dem Sicherheitsmodul den kryptographischen Schlüssel z.B. im Klartext über die Kommunikationsschnittstelle. Daraufhin speichert das Sicherheitsmodul den erhaltenen kryptographischen Schlüssel in seinem nichtflüchtigen Speicher. Gleichzeitig verriegelt sich das Sicherheitsmodul gegenüber der Übermittlung neuer kryptographischer Schlüssel. Ebenso oder alternativ kann sich die Steuereinrichtung gegen ein erneutes Übermitteln des kryptographischen Schlüssels verriegeln. D.h. die Kopplung der Steuereinrichtung mit dem Sicherheitsmodul kann genau ein einziges Mal durchgeführt werden. Bei jedem Systemstart leitet daraufhin die Steuereinrichtung den kryptographischen Schlüssel mittels der physikalisch nicht nachahmbaren Funktion PUF ab und das Sicherheitsmodul nutzt den in dem nicht-flüchtigen Speicher gespeicherten kryptographischen Schlüssel. Eine ungesicherte Kommunikation zwischen der Steuereinrichtung und dem Sicherheitsmodul findet nach diesem Schritt der Kopplung nicht mehr statt. Beispielsweise kann in einer Produktionsanlage eine spezielle Firmware in die Steuereinrichtung eingespielt werden, welche die Übermittlung des kryptographischen Schlüssels ermöglicht. Nachdem der kryptographische Schlüssel übermittelt wurde, kann in der Produktionsanlage die eigentliche Funktions-Firmware in die Steuereinrichtung eingespielt werden, welche die Übermittlung des kryptographischen Schlüssels nicht erlaubt.

Diese einmalige Kopplung des Sicherheitsmoduls an die Steuereinrichtung verhindert ferner den Missbrauch des Sicherheitsmoduls durch einen potentiellen Angreifer auf das System. Dem Angreifer ist es z.B. nicht möglich, ein gekoppeltes Sicherheitsmodul aus einem System zu entfernen, z.B. auszulöten, und missbräuchlich zu verwenden.

In weiteren Ausführungsformen ist das Sicherheitsmodul ferner mit geeigneten Hardwareschutzmechanismen ausgestattet, die ein Auslesen des Schlüssels aus dem nichtflüchtigen Speicher des Sicherheitsmoduls verhindern.

In einer Ausführungsform weist die Steuereinrichtung eine programmgesteuerte Einrichtung auf. Ferner kann eine Berechnungseinheit in der programmgesteuerten Einrichtung angeordnet sein, wobei die programmgesteuerte Einrichtung dazu ausgebildet ist, ein erstes Computerprogrammprodukt auszuführen, welches dazu ausgebildet ist, die verschlüsselte und/oder authentische Kommunikation mit dem Sicherheitsmodul über die Kommunikationsschnittstellen durchzuführen. Dabei kann die programmgesteuerte Einrichtung dazu ausgebildet sein, weitere Computerprogrammprodukte auszuführen, wobei die programmgesteuerte Einrichtung dazu ausgebildet ist, den weiteren Computerprogrammprodukten den Zugriff auf einen Speicher, welchen das erste Computerprogrammprodukt zum Speichern des kryptographischen Schlüssels nutzt, zu verweigern. Dies verhindert, dass ein Angreifer z.B. Schadprogramme in die Steuereinrichtung einschleusen kann, welche den kryptographischen Schlüssel direkt aus dem jeweiligen Speicherbereich des Speichers der Steuereinrichtung auslesen und dem Angreifer z.B. über eine weitere Schnittstelle der Steuereinrichtung mitteilen.

In einer Ausführungsform verweigert die Steuereinrichtung den weiteren Computerprogrammprodukten den Zugriff auf den Speicher, welchen das erste Computerprogrammprodukt nutzt, indem die Steuereinrichtung Speicherschutzmechanismen einer sog. "Memory Management Unit" nutzt. In einer weiteren Ausführungsform verhindert die Steuereinrichtung ferner, dass sog. Debugging-Werkzeuge, wie z.B. JTAG-Systeme, auf den Speicher zugreifen, welchen das erste Computerprogrammprodukt nutzt.

In einer Ausführungsform sind die Kommunikationsschnittstellen als SPI-Schnittstellen und/oder als I²C-Schnittstellen und/oder als digitale parallele Schnittstellen und/oder als digitale serielle Schnittstellen und/oder als kabellose Schnittstelle und/oder als optische Schnittstelle ausgebildet. Dies ermöglicht eine flexible Anpassung des Systems an unterschiedliche Anforderungen und Einsatzgebiete.

In einer Ausführungsform sind die Recheneinrichtung und/oder die programmgesteuerte Einrichtung als Mikrocontroller und/oder anwendungsspezifischer integrierter Schaltkreis und/oder programmierbarer Logikbaustein und/oder Computer und/oder embedded Computer ausgebildet. Dies ermöglicht ebenfalls eine flexible Anpassung des Systems an unterschiedliche Anforderungen und Einsatzgebiete.

In einer Ausführungsform ist die Hardwareeinrichtung als ein interner RAM-Speicher der Steuereinrichtung und/oder als eine oder mehrere Verzögerungsschleifen und/oder als ein oder mehrere Ringoszillatoren und/oder als zwei oder mehr Flip/Flops, zwischen welchen eine Kreuzkopplung besteht, und/oder als Leitungsmatrix, bei der das Material in den Leitungszwischenräume zufällig mit dielektrischen Partikeln und/oder Partikeln mit ohmschen Widerständen dotiert ist, ausgebildet. Dies ermöglicht es, die Hardwareeinrichtung entsprechend der jeweiligen Anwendung und der Erfordernisse der Einsatzumgebung auszuwählen und an den jeweiligen Einsatzzweck anzupassen. Dabei ist in einer Ausführungsform die Hardwareeinrichtung in einem Gehäuse mit der Steuereinrichtung oder als Bestandteil der Steuereinrichtung mit dieser in einem Gehäuse integriert.

In einer Ausführungsform weist die spezifische Merkmalskombination der Hardwareeinrichtung Laufzeiten einzelner Gatter der Hardwareeinrichtung und/oder ein Einschaltverhalten einzelner Komponenten, insbesondere ein Einschaltmuster eines internen RAM-Speichers, der Hardwareeinrichtung, insbesondere auch eines Prozessor-Caches der Steuereinrichtung, und/oder ohmsche Eigenschaften der Hardwareeinrichtung und/oder kapazitive Eigenschaften der Hardwareeinrichtung und/oder induktive Eigenschaften der Hardwareeinrichtung und/oder Frequenzen von Oszillatoren auf. Dies ermöglicht es ebenfalls, die Hardwareeinrichtung entsprechend der jeweiligen Anwendung und der Erfordernisse der Einsatzumgebung auszuwählen und an den jeweiligen Einsatzzweck anzupassen.

In einer Ausführungsform weist die spezifische Merkmalskombination das Einschaltmuster eines RAM-Speichers auf, welcher bei einem Systemstart nicht automatisch gelöscht wird. In solch einer Ausführungsform erzeugt die Steuereinrichtung den kryptographischen Schlüssel unmittelbar nachdem das System eingeschaltet wurde.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren der Zeichnungen angegebenen Ausführungsbeispiele näher erläutert. Es zeigen dabei:
- Fig. 1: ein Blockschaltbild einer Ausführungsform eines erfindungsgemäßen Systems;
- Fig. 2: ein Ablaufdiagramm einer Ausführungsform eines erfindungsgemäßen Verfahrens;
- Fig. 3: ein Blockschaltbild einer weiteren Ausführungsform eines erfindungsgemäßen Systems.

In den Figuren sind gleiche bzw. funktionsgleiche Elemente und Vorrichtungen - sofern nichts Anderes angegeben ist - mit denselben Bezugszeichen versehen.

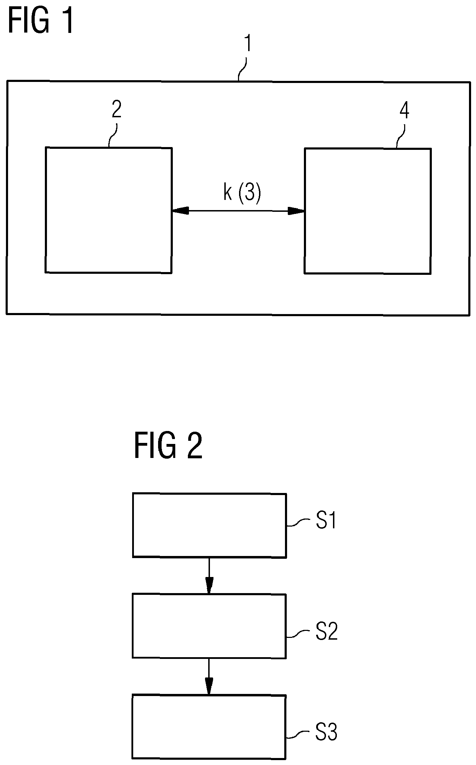

Fig. 1 zeigt ein Blockschaltbild einer Ausführungsform eines erfindungsgemäßen Systems 1. Das System 1 in Fig. 1 weist eine Steuereinrichtung 2 auf, welche dazu ausgebildet ist, einen kryptographischen Schlüssel 3 mittels einer physikalisch nicht nachahmbaren Funktion PUF zu erzeugen. Die Steuereinrichtung 2 ist ferner mit einem Sicherheitsmodul 4 gekoppelt. Die Kommunikation zwischen der Steuereinrichtung 2 und dem Sicherheitsmodul 4 erfolgt verschlüsselt und/oder authentisch. Dabei basiert die Verschlüsselung und/oder Authentisierung der Kommunikation zwischen der Steuereinrichtung 2 und dem Sicherheitsmodul 4 auf dem durch die Steuereinrichtung 2 erzeugten kryptographischen Schlüssel 3. Dies ist in Fig. 1 dadurch dargestellt, dass über die Verbindung zwischen der Steuereinrichtung 2 und dem Sicherheitsmodul 4 eine Kommunikation k in Abhängigkeit des kryptographischen Schlüssels 3, also k(3), durchgeführt wird.

Fig. 2 zeigt ein Ablaufdiagramm einer Ausführungsform eines erfindungsgemäßen Verfahrens.

In einem ersten Schritt S1 wird ein erfindungsgemäßes System 1 bereitgestellt. In einem zweiten Schritt S2 wird ein kryptographischer Schlüssel 3 mittels einer physikalisch nicht nachahmbaren Funktion, PUF, in einer Steuereinrichtung 2 erzeugt. Schließlich wird in einem dritten Schritt S3 zwischen der Steuereinrichtung 2 und einem Sicherheitsmodul 4, basierend auf dem erzeugten kryptographischen Schlüssel 3 verschlüsselt und/oder authentisch kommuniziert.

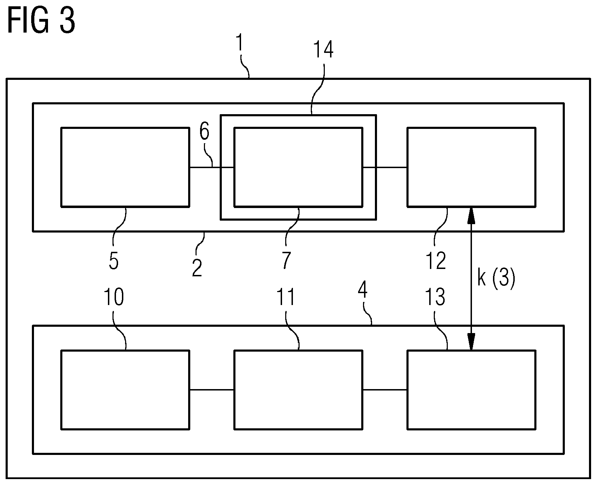

Fig. 3 zeigt ein Blockschaltbild einer weiteren Ausführungsform eines erfindungsgemäßen Systems 1.

Das System 1 in Fig. 3 unterscheidet sich von dem System 1 in Fig. 1 dahingehend, dass die Steuereinrichtung 2 eine Hardwareeinrichtung 5 aufweist, welche einer Berechnungseinheit 7 einer programmgesteuerten Einrichtung 14 eine spezifische Merkmalskombination 6 bereitstellt. Die Berechnungseinheit 7 erzeugt basierend auf der spezifischen Merkmalskombination 6 und einer physikalisch nicht nachahmbaren Funktion PUF den kryptographischen Schlüssel 3. Die Steuereinrichtung 2 kommuniziert über eine Kommunikationsschnittstelle 12 basierend auf dem kryptographischen Schlüssel 3 mit dem Sicherheitsmodul 4.

Das Sicherheitsmodul 4 weißt einen nichtflüchtigen Speicher 10 auf, in welchem das Sicherheitsmodul 4 den kryptographischen Schlüssel 3 speichert. Ferner weist das Sicherheitsmodul 4 eine Recheneinrichtung 11 auf, welche über eine Kommunikationsschnittstelle 13 mit der Steuereinrichtung 2 kommuniziert und von dieser den kryptographischen Schlüssel 3 erhält. Die Recheneinrichtung 11 ist ferner dazu ausgebildet, den kryptographischen Schlüssel 3 in dem nichtflüchtigen Speicher 10 zu speichern.

Die programmgesteuerte Einrichtung 14 der Steuereinrichtung 2 ist als Mikrocontroller 14 ausgeführt. Dabei ist die Berechnungseinheit 7 als ein Computerprogrammprodukt 7 ausgeführt, welches neben weiteren Computerprogrammprodukten in dem Mikrocontroller 14 ausgeführt wird. Um ein Zugreifen der weiteren Computerprogrammprodukte auf den Speicher des Mikrocontrollers 14 zu verhindern, in welchem der kryptographische Schlüssel 3 gespeichert ist, weist der Mikrocontroller 14 eine sog. Memory Management Unit auf. Diese Memory Management Unit weist jedem Computerprogrammprodukt einen eigenen Speicherbereich zu und verhindert, dass ein Computerprogrammprodukt auf einen Speicherbereich zugreift, welcher außerhalb des dem jeweiligen Computerprogrammprodukt zugewiesenen Speicherbereichs liegt.

Die Hardwareeinrichtung 5 der Steuereinrichtung 2 ist als Prozessorcache 5 der programmgesteuerten Einrichtung 14 ausgebildet. Der Prozessorcache 5 bildet in dem Moment des Einschaltens ein charakteristisches Einschaltmuster aus, aus welchem mittels der physikalisch nicht nachahmbaren Funktion PUF der kryptographische Schlüssel erzeugt wird. In weiteren Ausführungsformen kann die Hardwareeinrichtung 5 als eine gezielt hergestellte Hardwareeinrichtung 5, ein sog. unique/unclonable object, ausgebildet sein.

In einer Ausführungsform des Sicherheitsmoduls 4 ist der nicht-flüchtige Speicher 10 als Flash-Speicher 10 ausgeführt, in weiteren Ausführungsformen kann der nicht-flüchtige Speicher 10 als EEPROM Speicher 10, als OTP NVM (One Time Programmable Non Volatile Memory) 10 oder dergleichen ausgeführt sein. Ferner ist die Recheneinrichtung 11 als Mikrocontroller 11 ausgebildet. In weiteren Ausführungsformen kann die Recheneinrichtung 11 als Sicherheitscontroller 11, als ASIC 11, als FPGA 11 oder dergleichen ausgebildet sein.

In einer Ausführungsform ist das Sicherheitsmodul 4 als Sicherheits-IC ausgeführt, welcher mit der Steuereinrichtung 2 in einem elektronischen System integriert ist. Ein solches Sicherheitsmodul kann z.B. bei Steuerungen für industrielle Anlagen, z.B. SPSen oder PLCs, eingesetzt werden. In einer weiteren Ausführungsform kann das Sicherheitsmodul 4 als Smart-Card ausgeführt sein. Ein solches Sicherheitsmodul 4 kann insbesondere in Pay-TV Anwendungen, in Personenidentifikationsanlagen oder dergleichen eingesetzt werden.

In der in Fig. 3 dargestellten Ausführungsform sind die Kommunikationsschnittstellen 12, 13 als SPI-Schnittstellen 12, 13 ausgebildet. In weiteren Ausführungsformen können die Kommunikationsschnittstellen 12, 13 z.B. als I²C-Schnittstellen 12, 13, als USB-Schnittstellen 12, 13, als serielle Schnittstellen 12,13, als parallele Schnittstellen 12,13, als optische Schnittstellen 12, 13, z.B. Glasfaserschnittstellen 12, 13, als drahtlose Kommunikationsschnittstellen 12, 13, oder dergleichen ausgeführt sein.

In der in Fig. 3 dargestellten Ausführungsform wird das Sicherheitsmodul 4 in einem Produktionsschritt während der Herstellung eines elektrischen Systems mit der Steuereinrichtung 2 gekoppelt. Dabei überträgt die Steuereinrichtung 2 den kryptographischen Schlüssel 3 an das Sicherheitsmodul 4. Dieses verriegelt sich danach gegen ein erneutes Übermitteln des kryptographischen Schlüssels 3.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

## Patentansprüche

1. System (1) zur sicheren Übertragung von Daten,
mit
a) einer Steuereinrichtung (2), welche dazu ausgebildet ist, mittels einer physikalisch nicht nachahmbaren Funktion, PUF, einen kryptographischen Schlüssel (3) zu erzeugen; und
b) mit mindestens einem mit der Steuereinrichtung (2) gekoppelten Sicherheitsmodul (4), welches dazu ausgebildet ist, mit der Steuereinrichtung (2), basierend auf dem erzeugten kryptographischen Schlüssel (3), vertraulich und/oder authentisch zu kommunizieren;
c) wobei die Steuereinrichtung (2) keinen zugriffsgeschützten nicht-flüchtigen Speicher zum Speichern des kryptographischen Schlüssels (3) aufweist, und
d1) wobei das Sicherheitsmodul (4) einen zugriffsgeschützten nichtflüchtigen Speicher (10) und eine Recheneinrichtung (11) aufweist, welche dazu ausgebildet ist, den erzeugten kryptographischen Schlüssel (3) von der Steuereinrichtung (2) zu erhalten und in dem nichtflüchtigen Speicher (10) zu speichern; und
d2) wobei sich das Sicherheitsmodul (4) nach Übermittelung des Schlüssels gegen ein erneutes Übermitteln des kryptographischen Schlüssels verriegelt;
e) wobei das Sicherheitsmodul (4) dazu ausgebildet ist, den kryptographischen Schlüssel (3) von der Steuereinrichtung (2) lediglich ein einziges Mal zu erhalten und den erhaltenen kryptographischen Schlüssel (3) in dem zugriffsgeschützten nichtflüchtigen Speicher (10) abzuspeichern, wobei der zugriffsgeschützte nichtflüchtige Speicher (10) als ein einmal beschreibbarer Speicher (10) ausgebildet ist; und/oder wobei die Steuereinrichtung (2) dazu ausgebildet ist, den kryptographischen Schlüssel (3) dem Sicherheitsmodul (4) lediglich ein einziges Mal bereitzustellen; und
f1) wobei die Steuereinrichtung (2) und das Sicherheitsmodul (4) jeweils eine Kommunikationsschnittstelle (12; 13) aufweisen und dazu ausgebildet sind, über die Kommunikationsschnittstellen (12, 13) Daten auszutauschen;
f2) wobei die Steuereinrichtung (2) dazu ausgebildet ist, dem Sicherheitsmodul (4) über die Kommunikationsschnittstellen (12, 13) in einer unverschlüsselten Datenübertragung zunächst den kryptographischen Schlüssel (3) bereitzustellen und nach der Datenübertragung des kryptographischen Schlüssels (3) mit dem Sicherheitsmodul (4) basierend auf dem übertragenen kryptographischen Schlüssel (3) verschlüsselt und/oder authentisch zu kommunizieren; und
f3) wobei das Sicherheitsmodul (4) dazu ausgebildet ist, über die Kommunikationsschnittstellen (12, 13) mit der Steuereinrichtung (2) zunächst unverschlüsselt zu kommunizieren und nach dem Erhalten des kryptographischen Schlüssels (3) mit der Steuereinrichtung (2) basierend auf dem erhaltenen kryptographischen Schlüssel (3) verschlüsselt und/oder authentisch zu kommunizieren.

2. System nach Anspruch 1,
wobei die Steuereinrichtung (2) mindestens eine Hardwareeinrichtung (5), welche dazu ausgebildet ist, eine spezifische Merkmalskombination (6) bereitzustellen, und eine Berechnungseinheit (7) aufweist, welche dazu ausgebildet ist, basierend auf der bereitgestellten spezifischen Merkmalskombination (6) den kryptographischen Schlüssel (3) mittels der physikalisch nicht nachahmbaren Funktion, PUF, zu erzeugen.

3. System nach Anspruch 2,
wobei die Steuereinrichtung (2) eine programmgesteuerte Einrichtung (14) aufweist, und wobei die Berechnungseinheit (7) in der programmgesteuerten Einrichtung (14) angeordnet ist; wobei die programmgesteuerte Einrichtung (14) dazu ausgebildet ist, ein erstes Computerprogrammprodukt auszuführen, welches dazu ausgebildet ist, die verschlüsselte und/oder authentische Kommunikation mit dem Sicherheitsmodul (4) über die Kommunikationsschnittstellen (12, 13) durchzuführen, und wobei die programmgesteuerte Einrichtung (14) dazu ausgebildet ist, weitere Computerprogrammprodukte auszuführen,
wobei die programmgesteuerte Einrichtung (14) ferner dazu ausgebildet ist, den weiteren Computerprogrammprodukten den Zugriff auf einen Speicher, welchen das erste Computerprogrammprodukt zum Speichern des kryptographischen Schlüssels (3) nutzt, zu verweigern.

4. System nach mindestens einem der Ansprüche 2 bis 3,
wobei die Kommunikationsschnittstellen (12, 13) als SPI-Schnittstellen und/oder als I²C-Schnittstellen und/oder als digitale parallele Schnittstellen und/oder als digitale serielle Schnittstellen und/oder als kabellose Schnittstelle und/oder als optische Schnittstelle ausgebildet sind.

5. System nach mindestens einem der Ansprüche 3 und 4,
wobei die Recheneinrichtung (11) und/oder die programmgesteuerte Einrichtung (14) als Mikrocontroller und/oder anwendungsspezifischer integrierter Schaltkreis und/oder programmierbarer Logikbaustein und/oder Computer und/oder embedded Computer ausgebildet sind.

6. System nach mindestens einem der Ansprüche 2 bis 5,
wobei die Hardwareeinrichtung (5) als ein interner RAM-Speicher der Steuereinrichtung (2) und/oder als eine oder mehrere Verzögerungsschleifen und/oder als ein oder mehrere Ringoszillatoren und/oder als zwei oder mehr Flip/Flops, zwischen welchen eine Kreuzkopplung besteht, und/oder als Leitungsmatrix, bei der das Material in den Leitungszwischenräume zufällig mit dielektrischen Partikeln und/oder Partikeln mit ohmschen Widerständen dotiert ist, ausgebildet ist.

7. System nach mindestens einem der Ansprüche 2 bis 6,
wobei die spezifische Merkmalskombination (6) der Hardwareeinrichtung (5) Laufzeiten einzelner Gatter der Hardwareeinrichtung (5) und/oder ein Einschaltverhalten einzelner Komponenten, insbesondere ein Einschaltmuster eines internen RAM-Speichers, der Hardwareeinrichtung (5), insbesondere auch eines Prozessor-Caches der Steuereinrichtung (2), und/oder ohmsche Eigenschaften der Hardwareeinrichtung (5) und/oder kapazitive Eigenschaften der Hardwareeinrichtung (5) und/oder induktive Eigenschaften der Hardwareeinrichtung (5) und/oder Frequenzen von Oszillatoren der Hardwareeinrichtung (5) aufweist.

8. Verfahren zum sicheren Übertragen von Daten,
mit den Schritten:
a) Bereitstellen (S1) eines Systems (1) nach mindestens einem der Ansprüche 1 bis 7;
b) Erzeugen (S2) eines kryptographischen Schlüssels (3) mittels einer physikalisch nicht nachahmbaren Funktion, PUF, in einer Steuereinrichtung (2); und
c) Kommunizieren (S3) zwischen der Steuereinrichtung (2) und einem mit der Steuereinrichtung (2) gekoppeltem Sicherheitsmodul (4), basierend auf dem erzeugten kryptographischen Schlüssel (3); und
d1) wobei der erzeugte kryptographische Schlüssel (3) in dem Sicherheitsmodul (4) in einem zugriffsgeschützten nichtflüchtigen Speicher (10) des Sicherheitsmodul (4) gespeichert wird; und
d2) wobei sich das Sicherheitsmodul (4) nach Übermittelung des Schlüssels gegen ein erneutes Übermitteln des kryptographischen Schlüssels verriegelt;
e) wobei das Sicherheitsmodul (4) den kryptographischen Schlüssel (3) von der Steuereinrichtung (2) lediglich ein einziges Mal erhält und den erhaltenen kryptographischen Schlüssel (3) in dem zugriffsgeschützten nichtflüchtigen Speicher (10) abspeichert; und/oder wobei die Steuereinrichtung (2) den kryptographischen Schlüssel (3) dem Sicherheitsmodul (4) lediglich ein einziges Mal bereitstellt; und
f1) wobei die Steuereinrichtung (2) und das Sicherheitsmodul (4) jeweils eine Kommunikationsschnittstelle (12; 13) aufweisen und dazu ausgebildet sind, über die Kommunikationsschnittstellen (12, 13) Daten auszutauschen;
f2) wobei die Steuereinrichtung (2) dazu ausgebildet ist, dem Sicherheitsmodul (4) über die Kommunikationsschnittstellen (12, 13) in einer unverschlüsselten Datenübertragung zunächst den kryptographischen Schlüssel (3) bereitzustellen und nach der Datenübertragen des kryptographischen Schlüssels (3) mit dem Sicherheitsmodul (4) basierend auf dem übertragenen kryptographischen Schlüssel (3) verschlüsselt und/oder authentisch zu kommunizieren; und
f3) wobei das Sicherheitsmodul (4) dazu ausgebildet ist, über die Kommunikationsschnittstellen (12, 13) mit der Steuereinrichtung (2) zunächst unverschlüsselt zu kommunizieren und nach dem Erhalten des kryptographischen Schlüssels (3) mit der Steuereinrichtung (2) basierend auf dem erhaltenen kryptographischen Schlüssel (3) verschlüsselt und/oder authentisch zu kommunizieren.

9. Verfahren nach Anspruch 8,
wobei beim Erzeugen (S2) eines kryptographischen Schlüssels (3) eine spezifische Merkmalskombination (6) einer Hardwareeinrichtung (5) bereitgestellt wird und basierend auf der bereitgestellten spezifischen Merkmalskombination (6) der kryptographischen Schlüssel (3) mittels der physikalisch nicht nachahmbaren Funktion, PUF, erzeugt wird.

10. Verfahren nach mindestens einem der Ansprüche 8 bis 9, wobei die Steuereinrichtung (2) ein erstes Computerprogrammprodukt ausführt, welches die verschlüsselte Kommunikation mit dem Sicherheitsmodul (4) über die Kommunikationsschnittstelle (12, 13) durchführt, und wobei die Steuereinrichtung (2) weitere Computerprogrammprodukte ausführt,
wobei die Steuereinrichtung (2) den weiteren Computerprogrammprodukten der Zugriff auf einen Speicher, welchen das erste Computerprogrammprodukt zum Speichern des kryptographischen Schlüssels (3) nutzt, verweigert.

## Claims

1. System (1) for securely transmitting data, having
a) a control device (2), which is designed to use a physically unclonable function, PUF, to produce a cryptographic key (3); and
b) having at least one security module (4), coupled to the control device (2), which is designed to communicate with the control device (2) confidentially and/or authentically on the basis of the cryptographic key (3) produced;
c) wherein the control device (2) does not have an access-protected nonvolatile memory for storing the cryptographic key (3), and
d1) wherein the security module (4) has an access-protected nonvolatile memory (10) and a computation device (11), which is designed to receive the cryptographic key (3) produced from the control device (2) and to store it in the nonvolatile memory (10); and
d2) wherein the security module (4), after transmitting the key, is locked against renewed transmission of the cryptographic key;
e) wherein the security module (4) is designed to receive the cryptographic key (3) from the control device (2) only a single time and to store the received cryptographic key (3) in the access-protected nonvolatile memory (10), wherein the access-protected nonvolatile memory (10) is in the form of a write-once memory (10); and/or wherein the control device (2) is designed to provide the cryptographic key (3) for the security module (4) only a single time; and
f1) wherein the control device (2) and the security module (4) each have a communication interface (12; 13) and are designed to use the communication interfaces (12, 13) to interchange data;
f2) wherein the control device (2) is designed to first of all provide the security module (4) with the cryptographic key (3) via the communication interfaces (12, 13) in an unencrypted data transmission and, following the data transmission of the cryptographic key (3), to communicate with the security module (4) in encrypted form and/or authentically on the basis of the transmitted cryptographic key (3); and
f3) wherein the security module (4) is designed to use the communication interfaces (12, 13) to first of all communicate with the control device (2) in unencrypted form and, following the receipt of the cryptographic key (3), to communicate with the control device (2) in encrypted form and/or authentically on the basis of the received cryptographic key (3).

2. System according to Claim 1,
wherein the control device (2) has at least one hardware device (5), which is designed to provide a specific feature combination (6), and a calculation unit (7), which is designed to take the provided specific feature combination (6) as a basis for producing the cryptographic key (3) using the physically unclonable function, PUF.

3. System according to Claim 2, wherein the control device (2) has a program-controlled device (14), and wherein the calculation unit (7) is arranged in the program-controlled device (14); wherein the program-controlled device (14) is designed to execute a first computer program product, which is designed to perform the encrypted and/or authentic communication with the security module (4) via the communication interfaces (12, 13), and wherein the program-controlled device (14) is designed to execute further computer program products, wherein the program-controlled device (14) is also designed to deny the further computer program products access to a memory that is used by the first computer program product for storing the cryptographic key (3).

4. System according to at least one of Claims 2 to 3, wherein the communication interfaces (12, 13) are in the form of SPI interfaces and/or in the form of I²C interfaces and/or in the form digital parallel interfaces and/or in the form of digital serial interfaces and/or in the form of a wireless interface and/or in the form of an optical interface.

5. System according to at least one of Claims 3 and 4, wherein the computation device (11) and/or the program-controlled device (14) is/are in the form of a microcontroller and/or an application-specific integrated circuit and/or a programmable logic chip and/or a computer and/or an embedded computer.

6. System according to at least one of Claims 2 to 5, wherein the hardware device (5) is in the form of an internal RAM memory of the control device (2) and/or in the form of a one or more delay loops and/or in the form of one or more ring-oscillators and/or in the form of two or more flipflops between which there is a cross-coupling and/or in the form of a line matrix in which the material in the line interspaces is randomly doped with dielectric particles and/or particles having nonreactive resistances.

7. System according to at least one of Claims 2 to 6, wherein the specific feature combination (6) of the hardware device (5) has transit times for individual gates of the hardware device (5) and/or a turn-on behavior for individual components, particularly a turn-on pattern for an internal RAM memory, of the hardware device (5), particularly also for a processor cache of the control device (2), and/or resistive properties of the hardware device (5) and/or capacitive properties of the hardware device (5) and/or inductive properties of the hardware device (5) and/or frequencies of oscillators of the hardware device (5).

8. Method for securely transmitting data, having the steps of:
a) provision (S1) of a system (1) according to at least one of claims 1 to 7;
b) production (S2) of a cryptographic key (3) using a physically unclonable function, PUF, in a control device (2); and
c) communication (S3) between the control device (2) and a security module (4), coupled to the control device (2), on the basis of the cryptographic key (3) produced; and
d1) wherein the cryptographic key (3) produced is stored in the security module (4) in an access-protected nonvolatile memory (10) of the security module (4); and
d2) wherein the security module (4), after transmitting the key, is locked against renewed transmission of the cryptographic key;
e) wherein the security module (4) receives the cryptographic key (3) from the control device (2) only a single time and stores the received cryptographic key (3) in the access-protected nonvolatile memory (10); and/or wherein the control device (2) provides the cryptographic key (3) for the security module (4) only a single time; and
f1) wherein the control device (2) and the security module (4) each have a communication interface (12; 13) and are designed to use the communication interfaces (12, 13) to interchange data;
f2) wherein the control device (2) is designed to first of all provide the security module (4) with the cryptographic key (3) via the communication interfaces (12, 13) in an unencrypted data transmission and, following the data transmission of the cryptographic key (3), to communicate with the security module (4) in encrypted form and/or authentically on the basis of the transmitted cryptographic key (3); and
f3) wherein the security module (4) is designed to use the communication interfaces (12, 13) to first of all communicate with the control device (2) in unencrypted form and, following the receipt of the cryptographic key (3), to communicate with the control device (2) in encrypted form and/or authentically on the basis of the received cryptographic key (3).

9. Method according to Claim 8,
wherein the production (S2) of a cryptographic key (3) involves the provision of a specific feature combination (6) for a hardware device (5) and, on the basis of the provided specific feature combination (6), the production of the cryptographic key (3) using the physically unclonable function, PUF.

10. Method according to at least one of Claims 8 to 9, wherein the control device (2) executes a first computer program product that performs the encrypted communication with the security module (4) via the communication interface (12, 13), and wherein the control device (2) executes further computer program products,
wherein the control device (2) denies the further computer program products access to a memory that is used by the first computer program product for storing the cryptographic key (3).

## Revendications

1. Système (1) de transmission sécurisée de données, comportant
a) un dispositif de commande (2) qui est conçu pour générer une clé cryptographique (3) au moyen d'une fonction physique inimitable, PUF, et
b) au moins un module de sécurité (4) qui est couplé au dispositif de commande (2) et est conçu pour communiquer confidentiellement et/ou authentiquement avec le dispositif de commande (2) sur la base de la clé cryptographique générée (3) ;
c) le dispositif de commande (2) ne comportant pas de mémoire non volatile protégée en accès pour le stockage de la clé cryptographiques (3) et
d1) le module de sécurité (4) comportant une mémoire non volatile protégée en accès (10) et un dispositif de calcul (11) qui est conçu pour recevoir la clé cryptographique générée (3) du dispositif de commande (2) et la sauvegarder dans la mémoire non volatile (10) et
d2) le module de sécurité (4) se bloquant, après la transmission de la clé, pour empêcher une nouvelle transmission de la clé cryptographique ;
e) le module de sécurité (4) étant conçu pour ne recevoir qu'une seule fois la clé cryptographique (3) du dispositif de commande (2) et sauvegarder la clé cryptographique reçue (3) dans la mémoire non volatile protégée en accès (10), la mémoire non volatile protégée en accès (10) étant conçue en tant que mémoire inscriptible une fois (10) et/ou le dispositif de commande (2) étant conçu pour ne fournir qu'une seule fois la clé cryptographique (3) au module de sécurité (4) et
f1) le dispositif de commande (2) et le module de sécurité (4) comportant respectivement une interface de communication (12 ; 13) et étant conçus pour échanger des données via les interfaces de communication (12, 13) ;
f2) le dispositif de commande (2) étant conçu pour fournir tout d'abord la clé cryptographique (3) au module de sécurité (4) via les interfaces de communication (12, 13) dans une transmission de données non cryptée et pour communiquer de manière cryptée et/ou authentiquement, après la transmission de données de la clé cryptographique (3), avec le module de sécurité (4) sur la base de la clé cryptographique transmise (3) et
f3) le module de sécurité (4) étant conçu pour communiquer tout d'abord de manière non cryptée avec le dispositif de commande (2) via l'interface de communication (12, 13) et pour communiquer de manière cryptée et/ou authentiquement, après la réception de la clé cryptographique (3), avec le dispositif de commande (2) sur la base de la clé cryptographique reçue (3).

2. Système selon la revendication 1, le dispositif de commande (2) comportant au moins un dispositif matériel (5) qui est conçu pour fournir une combinaison de caractéristiques spécifique (6) et une unité de calcul (7) qui est conçue pour générer la clé cryptographique (3) au moyen de la fonction physique inimitable, PUF, sur la base de la combinaison de caractéristiques spécifique fournie (6).

3. Système selon la revendication 2, le dispositif de commande (2) comportant une unité commandée par programme (14) et l'unité de calcul (7) étant agencée dans l'unité commandée par programme (14),
l'unité commandée par programme (14) étant conçue pour exécuter un premier produit de programme informatique qui est conçu pour exécuter la communication cryptée et/ou authentique avec le module de sécurité (4) via les interfaces de communication (12, 13) et l'unité commandée par programme (14) étant conçue pour exécuter d'autres produits de programme informatique,
l'unité commandée par programme (14) étant en outre conçue pour refuser aux autres produits de programme informatique l'accès à une mémoire qu'utilise le premier produit de programme informatique pour sauvegarder la clé cryptographiques (3).

4. Système selon au moins l'une des revendications 2 à 3, les interfaces de communication (12, 13) étant réalisées en tant qu'interfaces SPI et/ou interfaces I²C et/ou interfaces parallèles numériques et/ou interfaces série numériques et/ou interface sans fil et/ou interface optique.

5. Système selon au moins l'une des revendications 3 et 4, le dispositif de calcul (11) et/ou le dispositif commandé par programme (14) étant réalisés en tant que microcontrôleur et/ou circuit intégré spécifique à l'application et/ou unité logique programmable et/ou ordinateur et/ou ordinateur embarqué.

6. Système selon au moins l'une des revendications 2 à 5, le dispositif matériel (5) étant réalisé en tant que mémoire RAM interne du dispositif de commande (2) et/ou en tant qu'une ou plusieurs boucles de temporisation et/ou un ou plusieurs oscillateurs annulaires et/ou deux ou plusieurs bascules avec un couplage croisé entre elles et/ou matrice de lignes selon laquelle la matière dans les espaces entre les lignes est dopée aléatoirement avec des particules diélectriques et/ou des particules avec résistances ohmiques.

7. Système selon au moins l'une des revendications 2 à 6, la combinaison de caractéristiques spécifique (6) du dispositif matériel (5) présentant des temps de fonctionnement de portes individuelles du dispositif matériel (5) et/ou un comportement d'enclenchement de composants individuels, en particulier un schéma d'enclenchement d'une mémoire RAM interne, du dispositif matériel (5), y compris notamment d'un cache de processeur du dispositif de commande (2), et/ou des caractéristiques ohmiques du dispositif matériel (5) et/ou des caractéristiques capacitives du dispositif matériel (5) et/ou des caractéristiques inductives du dispositif matériel (5) et/ou des fréquences d'oscillateurs du dispositif matériel (5).

8. Procédé de transmission sécurisée de données, comportant les étapes suivantes :
a) fourniture (S1) d'un système (1) selon au moins l'une des revendications 1 à 7 ;
b) génération (S2) d'une clé cryptographique (3) au moyen d'une fonction physique inimitable, PUF, dans un dispositif de commande (2) et
c) communication (S3) entre le dispositif de commande (2) et un module de sécurité (4) couplé au dispositif de commande (2), sur la base de la clé cryptographique générée (3) et
d1) la clé cryptographique générée (3) étant stockée dans le module de sécurité (4) dans une mémoire non volatile protégée en accès (10) du module de sécurité (4) et
d2) le module de sécurité (4) se verrouillant, après la transmission de la clé, pour empêcher une nouvelle transmission de la clé cryptographique ;
e) le module de sécurité (4) ne recevant qu'une seule fois la clé cryptographique (3) du dispositif de commande (2) et sauvegardant la clé cryptographique reçue (3) dans la mémoire non volatile protégée en accès (10) et/ou le dispositif de commande (2) ne fournissant qu'une seule fois la clé cryptographique (3) au module de sécurité (4) et
f1) le dispositif de commande (2) et le module de sécurité (4) comportant respectivement une interface de communication (12 ; 13) et étant conçus pour échanger des données via les interfaces de communication (12, 13) ;
f2) le dispositif de commande (2) étant conçu pour fournir tout d'abord la clé cryptographique (3) au module de sécurité (4) via les interfaces de communication (12, 13) dans une transmission de données non cryptée et pour communiquer de manière cryptée et/ou authentiquement, après la transmission de données de la clé cryptographique (3), avec le module de sécurité (4) sur la base de la clé cryptographique transmise (3) et f3) le module de sécurité (4) étant conçu pour communiquer tout d'abord de manière non cryptée avec le dispositif de commande (2) via l'interface de communication (12, 13) et pour communiquer de manière cryptée et/ou authentiquement, après la réception de la clé cryptographique (3), avec le dispositif de commande (2) sur la base de la clé cryptographique reçue (3).

9. Procédé selon la revendication 8, une combinaison de caractéristiques spécifique (6) étant, lors de la génération (S2) d'une clé cryptographique (3) fournie à un dispositif matériel (5) et, sur la base de la combinaison de caractéristiques spécifique fournie (6), la clé cryptographique (3) étant générée au moyen de la fonction physique inimitable, PUF.

10. Procédé selon au moins l'une des revendications 8 à 9,
le dispositif de commande (2) exécutant un premier produit de programme informatique qui exécute la communication cryptée avec le module de sécurité (4) via l'interface de communication (12, 13) et l'unité de commande (2) exécutant d'autres produits de programme informatique,
l'unité de commande (2) refusant aux autres produits de programme informatique l'accès à une mémoire qu'utilise le premier produit de programme informatique pour sauvegarder la clé cryptographiques (3).
